# EUROPEAN PATENT APPLICATION

(11) **EP 4 783 628 A1**
(43) Date of publication of application: **29.07.2026**
(21) Application number: 25203951.6
(22) Date of filing: 23.09.2025
(51) Int. Cl.: H04W 4/80, H04L 5/00, H04W 24/02

(54) **BLUETOOTH SYSTEM USING MULTI-ACCESS PACKET FORMAT FOR TRANSCEIVING BLUETOOTH PACKET AND ASSOCIATED BLUETOOTH DEVICE**

(30) Priority: 24.01.2025 US 202563748979 P; 27.08.2025 US 202519312292
(71) Applicant: Airoha Technology Corp., 300 Hsinchu City (TW)
(72) Inventor: ZHANG, Yun-Xuan, 302 Hsinchu County (TW); HSIEH, Ming-Yi, 308 Hsinchu County (TW)
(74) Representative: Hoefer & Partner Patentanwälte mbB

(57) **Abstract**

A Bluetooth, BT, communication system includes a first BT device (104_1) and a second BT device (104_2). The first BT device (104_1) generates and transmits a first packet segment. The second BT device (104_2) generates and transmits a second packet segment. The first packet segment and the second packet segment belong to a single BT packet.

## Description

### CROSS REFERENCE TO RELATED APPLICATIONS

This application claims the benefit of U.S. Provisional Application No. 63/748,979, filed on January 24th, 2025. The content of the application is incorporated herein by reference.

### BACKGROUND OF THE INVENTION

### 1. FIELD OF THE INVENTION

The present invention relates to wireless communications, and more particularly, to a Bluetooth (BT) system using a multi-access packet format for transceiving (transmitting or receiving) a BT packet and an associated BT device.

### 2. DESCRIPTION OF THE PRIOR ART

With the development of the BT technology, Low Energy (LE) Audio brings significant advancements to audio playback, and is suitable for devices like wireless earphones and hearing aids. There are two key modes in LE Audio: Broadcast Isochronous Stream (BIS) and Connected Isochronous Stream (CIS) . Several BIS streams can form a Broadcast Isochronous Group (BIG). Several CIS streams can form a Connected Isochronous Group (CIG). BIS/BIG broadcasting enables one-way data transmission from a master device to multiple slave devices at a time, thus getting lower latency. However, BIS/BIG broadcasting has lower stability due to the fact that the master device cannot receive an acknowledgment (ACK) or a negative acknowledgment (NACK) from any slave device. CIS/CIG broadcasting focuses on direct, device-to-device connections. Hence, CIS/CIG broadcasting enables two-way data transmission between a master device and multiple slave devices, creating a connected and dedicated audio experience between two paired BT devices. CIS/CIG broadcasting has higher stability due to ACK/NACK information exchange between the master device and each slave BT device paired with the master device. However, since the transceiving time overhead is too long, CIS/CIG broadcasting suffers higher latency, and fails to meet requirements of a low-latency application (e.g., a gaming application). Thus, there is a need for an innovative transmission mechanism which can reduce the transceiving time overhead.

### SUMMARY OF THE INVENTION

One of the objectives of the claimed invention is to provide a BT system using a multi-access packet format for transceiving (transmitting or receiving) a BT packet and an associated BT device. A BT system and BT devices according to the invention are defined in the independent claims. The dependent claims define preferred embodiments thereof.

According to a first aspect of the present invention, an exemplary BT communication system is disclosed. The exemplary BT communication system includes a first BT device and a second BT device. The first BT device is configured to generate and transmit a first packet segment. The second BT device is configured to generate and transmit a second packet segment. The first packet segment and the second packet segment belong to a single BT packet.

According to a second aspect of the present invention, an exemplary first BT device is disclosed. The exemplary first BT device includes a wireless communication circuit and a control circuit. The wireless communication circuit is configured to receive a plurality of packet segments, wherein the plurality of packet segments comprise a first packet segment transmitted from a second BT device and a second packet segment transmitted from a third BT device. The control circuit is configured to obtain a single BT packet according to the plurality of packet segments, wherein the plurality of packet segments belong to the single BT packet.

According to a third aspect of the present invention, a first BT device is disclosed. The first BT device includes a control circuit and a wireless communication circuit. The control circuit is configured to generate a first packet segment. The wireless communication circuit is configured to transmit the first packet segment to a second BT device, and receive a second packet segment transmitted from the second BT device, wherein the first packet segment and the second packet segment belong to a single BT packet.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a BT system according to an embodiment of the present invention.
FIG. 2 is a diagram illustrating a multi-access packet format according to an embodiment of the present invention.
FIG. 3 is a timing diagram of transceiving (transmitting or receiving) a single BT packet with the proposed multi-access packet format under a first operation scenario according to an embodiment of the present invention.
FIG. 4 is a timing diagram of transceiving (transmitting or receiving) a single BT packet with the proposed multi-access packet format under a second operation scenario according to an embodiment of the present invention.
FIG. 5 is a timing diagram of transceiving (transmitting or receiving) a single BT packet with the proposed multi-access packet format under a third operation scenario according to an embodiment of the present invention.
FIG. 6 is a diagram illustrating comparison between a sub-interval under a condition that the conventional HDT packet format is adopted and a sub-interval under a condition that the proposed multi-access packet format is adopted.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

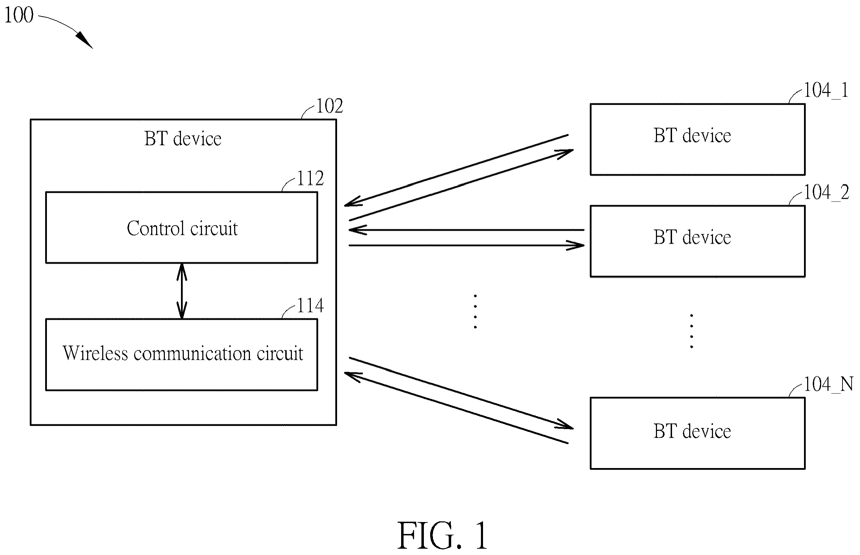

FIG. 1 is a diagram illustrating a BT system according to an embodiment of the present invention. The BT system 100 includes a plurality of BT devices 102, 104_1, 104_2, ..., 104_N (N ≥ 2). For example, the BT device 102 may be a dongle device acting as a master device, and the BT devices 104_1-104_N (N ≥ 2) may be peripheral devices acting as slave devices. For example, a peripheral device paired with the dongle device may be a headset, a keyboard, or a mouse. In this embodiment, the BT system 100 supports the proposed multi-access packet format. Specifically, each of the BT devices 102 and 104_1-104_N (N ≥ 2) includes circuits to deal with the proposed multi-access packet format for transceiving (transmitting or receiving) a single BT packet. Taking the BT device 102 for example, it includes a control circuit 112 and a wireless communication circuit 114. The wireless communication circuit 114 may include a transceiver for transmitting packet data to other BT devices 104_1-104_N (N ≥ 2) and receiving packet data from other BT devices 104_1-104_N (N ≥ 2). It should be noted that only the components pertinent to the present invention are illustrated in FIG. 1. In practice, a BT device may include additional components to achieve designated functions.

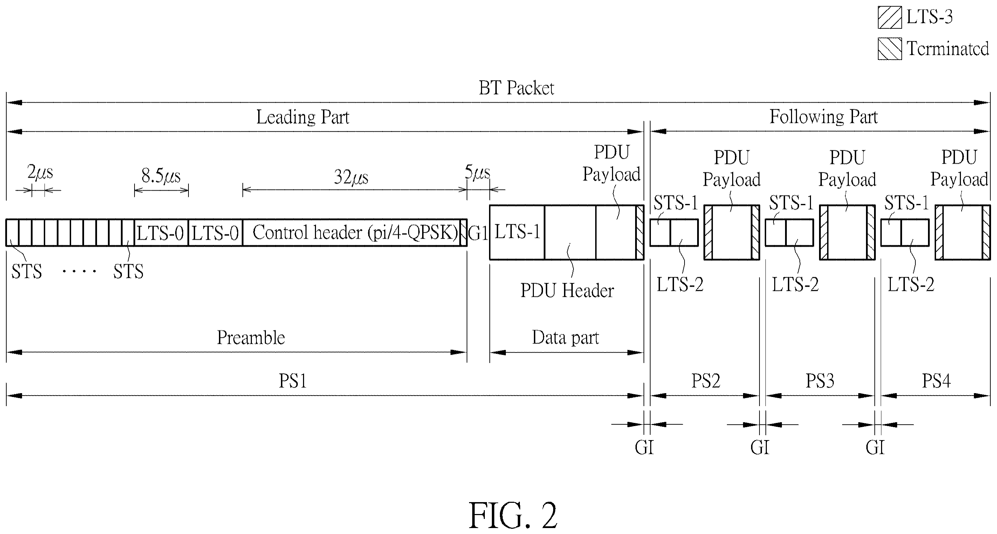

FIG. 2 is a diagram illustrating a multi-access packet format according to an embodiment of the present invention. For example, a BT packet may be an LE packet, and the proposed multi-access packet format of the BT packet may be an LE Higher Data Throughput (HDT) packet format. In accordance with the proposed multi-access packet format, a single BT packet is partitioned into a plurality of packet segments. For example, the single BT packet shown in FIG. 2 includes four packet segments PS1, PS2, PS3, and PS4, where the packet segment PS1 forms a leading part, and the packet segments PS2, PS3, and PS4 form a following part. It should be noted that the leading part can be optional, depending up the operation scenarios; and the following part is mandatory regardless of the operation scenarios. The leading part (i.e., packet segment PS1) may include a preamble and a data part, where the preamble may include a plurality of short training sequences STS, a plurality of long training sequences LTS-0, and a control header, and the data part may include a long training sequence LTS-1, a protocol data unit (PDU) header, a PDU payload, and a termination sequence. Each of the packet segments PS2, PS3, and PS4 included in the following part may include a short training sequence STS-1, a plurality of long training sequences LTS-2, LTS-3, a PDU payload, and a termination sequence. Since packet segments PS1, PS2, PS3, and PS4 belong to the same BT packet, the control header of the BT packet is present in the leading part (i.e., packet segment PS1) only, and is absent in the following part (i.e., packet segments PS2, PS3, and PS4). In addition, since packet segments PS1, PS2, PS3, and PS4 belong to the same BT packet, transmission of the packet segment PS1 and transmission of the next packet segment PS2 is spaced by a guard interval (GI) rather than an interframe space (TIFS), transmission of the packet segment PS2 and transmission of the next packet segment PS3 is spaced by a GI rather than a TIFS, and transmission of the packet segment PS3 and transmission of the next packet segment PS4 is spaced by a GI rather than a TIFS, where GI « TIFS.

The proposed multi-access packet format enables different BT devices to transmit different packet segments PS1, PS2, PS3, PS4 of the same BT packet, respectively. For better comprehension of technical features of the present invention, several examples of transceiving (transmitting or receiving) a single BT packet with the proposed multi-access packet format are provided as below.

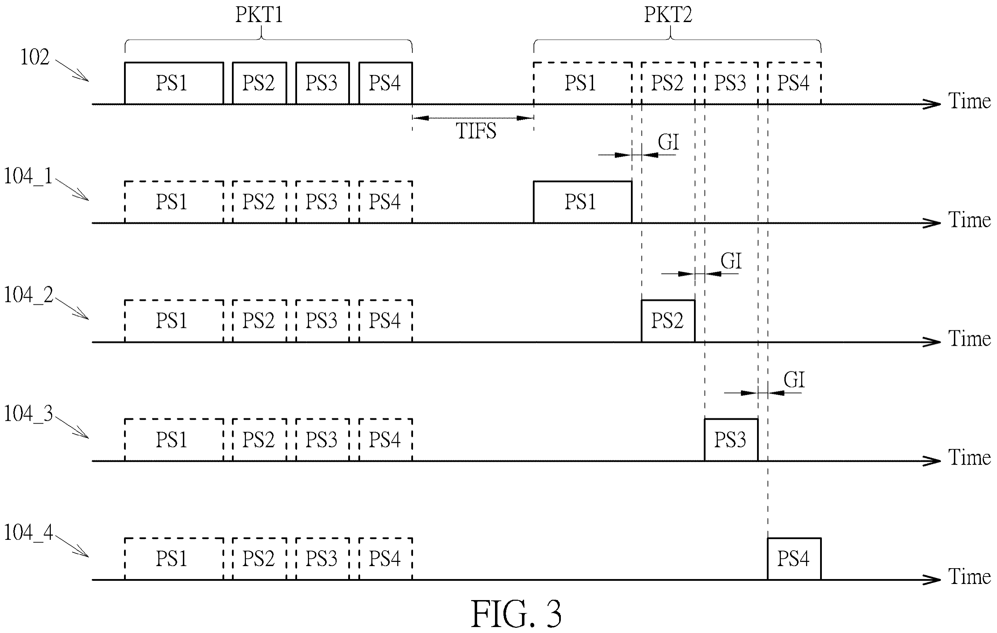

FIG. 3 is a timing diagram of transceiving (transmitting or receiving) a single BT packet with the proposed multi-access packet format (e.g., an LE packet with a multi-access HDT packet format) under a first operation scenario according to an embodiment of the present invention. Consider a case where the BT system 100 operates under a gaming scenario, and has five BT devices, where the BT device 102 is a dongle device acting as a master device, and the BT devices 104_1-104_4 (N=4) are peripheral devices acting as slave devices. The BT device 102 transmits downlink streaming data to all of the BT devices 104_1-104_4 via broadcasting a BT packet PKT1 with the proposed multi-access packet format. Specifically, the control circuit 112 of the BT device 102 generates the BT packet PKT1 (which carries downlink streaming data as PDU payload), and instructs the wireless communication circuit 114 (particularly, a transmitter of wireless communication circuit 114) to broadcast the same BT packet PKT1 to all of the BT devices 104_1-104_4. In response to receiving the BT packet PKT1 from the BT device 102, the BT device 104_1 generates and transmits a packet segment PS1 (which is a leading part of a BT packet PKT2) to the BT device 102. For example, the packet segment PS1 may carry ACK/NACK information and/or other data. In response to receiving the BT packet PKT1 from the BT device 102, the BT device 104_2 generates and transmits a packet segment PS2 (which is a 1^{st} packet segment of a following part of the same BT packet PKT2) to the BT device 102. For example, the packet segment PS2 may carry ACK/NACK information and/or other data. In response to receiving the BT packet PKT1 from the BT device 102, the BT device 104_3 generates and transmits a packet segment PS3 (which is a 2^{nd} packet segment of the following part of the same BT packet PKT2) to the BT device 102. For example, the packet segment PS3 may carry ACK/NACK information and/or other data. In response to receiving the BT packet PKT1 from the BT device 102, the BT device 104_4 generates and transmits a packet segment PS4 (which is a last packet segment of the following part of the same BT packet PKT2) to the BT device 102. For example, the packet segment PS4 may carry ACK/NACK information and/or other data.

The wireless communication circuit 114 (particularly, a receiver of the wireless communication circuit 114) of the BT device 102 receives the packet segment PS1 of the BT packet PKT2 from the BT device 104_1, the packet segment PS2 of the BT packet PKT2 from the BT device 104_2, the packet segment PS3 of the BT packet PKT2 from the BT device 104_3, and the packet segment PS4 of the BT packet PKT2 from the BT device 104_4, and obtains a single BT packet (i.e., BT packet PKT2) according to packet segments PS1-PS4 transmitted from different BT devices 104_1-104_4. In other words, the BT device 102 treats the packet segments PS1-PS4 as packet segments belonging to the same BT packet, and recovers the BT packet PKT2 by concatenating the packet segments PS1-PS4.

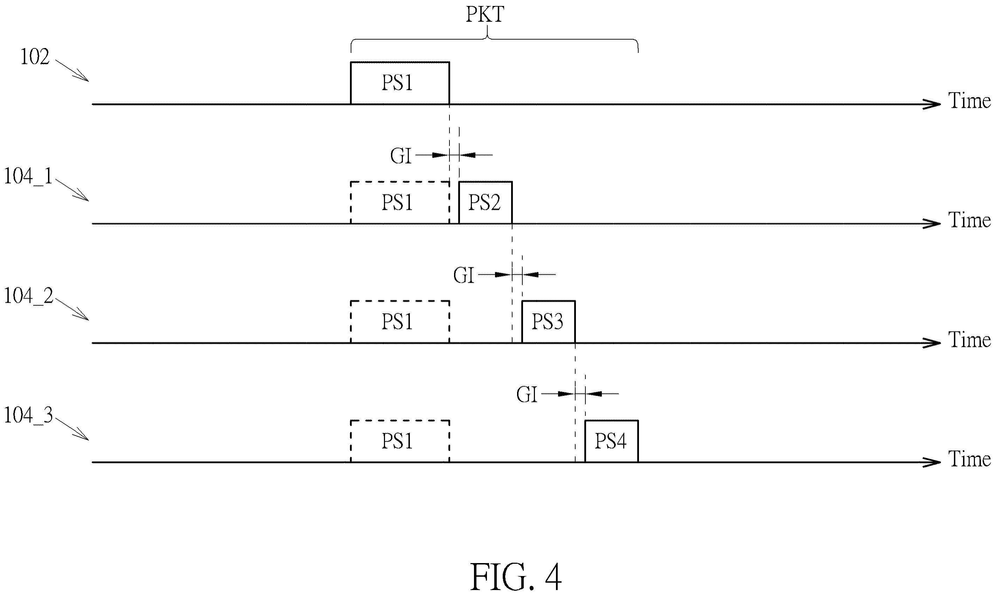

FIG. 4 is a timing diagram of transceiving (transmitting or receiving) a single BT packet with the proposed multi-access packet format (e.g., an LE packet with a multi-access HDT packet format) under a second operation scenario according to an embodiment of the present invention. Consider a case where the BT system 100 operates in a gaming scenario, and has four BT devices, where the BT device 102 is a dongle device acting as a master device, and the BT devices 104_1-104_3 (N=3) are peripheral devices acting as slave devices. The BT device 102 generates and transmits a packet segment PS1 (which is a leading part of a BT packet PKT) . For example, the control circuit 112 of the BT device 102 generates the packet segment PS1, and instructs the wireless communication circuit 114 (particularly, a transmitter of wireless communication circuit 114) to broadcast the same packet segment PS1 to all of the BT devices 104_1-104_3. After the packet segment PS1 is transmitted by the BT device 102, the BT device 104_1 generates and transmits a packet segment PS2 (which is a 1^{st} packet segment of a following part of the same BT packet PKT) to the BT device 102. After the packet segment PS2 is transmitted by the BT device 104_1, the BT device 104_2 generates and transmits a packet segment PS3 (which is a 2^{nd} packet segment of the following part of the same BT packet PKT) to the BT device 102. After the packet segment PS3 is transmitted by the BT device 104_2, the BT device 104_3 generates and transmits a packet segment PS4 (which is a last packet segment of the following part of the same BT packet PKT) to the BT device 102.

When the BT devices 102, 104_1-104_N (N ≥ 2) use the proposed multi-access packet format to establish connections for the first time, the control header included in the leading part is required. After the connections are correctly connected, the control header is no longer needed. Preferably, according to the present invention, a BT packet may omit a leading part, and includes a following part only.

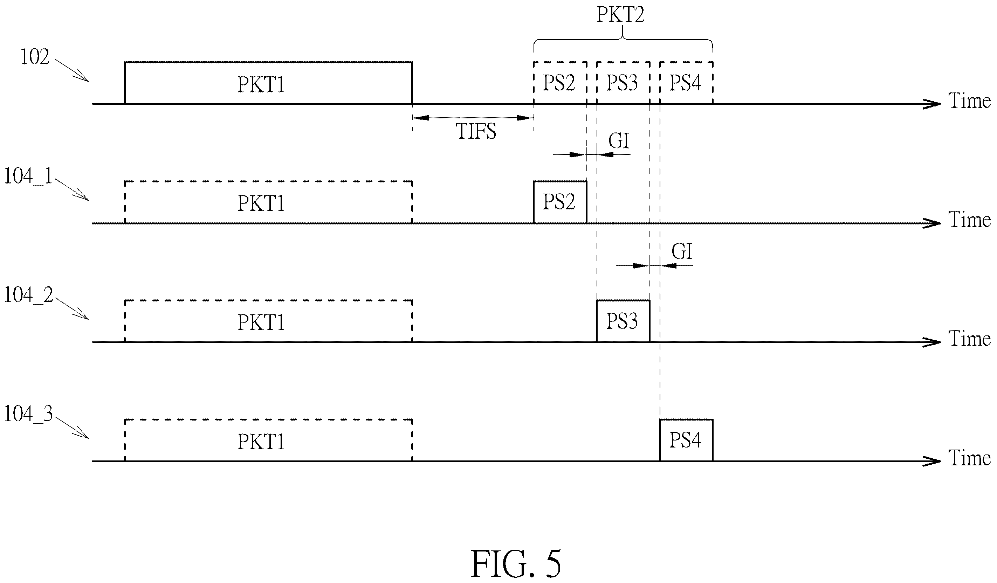

FIG. 5 is a timing diagram of transceiving (transmitting or receiving) a single BT packet with the proposed multi-access packet format (e.g., an LE packet with a multi-access HDT packet format) under a third operation scenario according to an embodiment of the present invention. Consider a case where the BT system 100 operates in a gaming scenario, and has four BT devices, where the BT device 102 is a dongle device acting as a master device, and the BT devices 104_1-104_3 (N=3) are peripheral devices acting as slave devices. The BT device 102 transmits a BT packet PKT1 with a conventional HDT packet format or the proposed multi-access packet format to all of the BT devices 104_1-104_3. Specifically, the control circuit 112 of the BT device 102 generates the BT packet PKT1, and instructs the wireless communication circuit 114 (particularly, a transmitter of wireless communication circuit 114) to broadcast the same BT packet PKT1 to all of the BT devices 104_1-104_3. In response to receiving the BT packet PKT1 from the BT device 102, the BT device 104_1 generates and transmits a packet segment PS2 (which is a 1^{st} packet segment of a following part of a BT packet PKT2) to the BT device 102. For example, the packet segment PS2 may carry ACK/NACK information and/or other data. In this embodiment, the optional leading part is absent in the BT packet PKT2. In response to receiving the BT packet PKT1 from the BT device 102, the BT device 104_2 generates and transmits a packet segment PS3 (which is a 2^{nd} packet segment of the following part of the same BT packet PKT2) to the BT device 102. For example, the packet segment PS3 may carry ACK/NACK information and/or other data. In response to receiving the BT packet PKT1 from the BT device 102, the BT device 104_3 generates and transmits a packet segment PS4 (which is a last packet segment of the following part of the same BT packet PKT2) to the BT device 102. For example, the packet segment PS4 may carry ACK/NACK information and/or other data.

The wireless communication circuit 114 (particularly, a receiver of the wireless communication circuit 114) of the BT device 102 receives the packet segment PS2 of the BT packet PKT2 from the BT device 104_1, the packet segment PS3 of the BT packet PKT2 from the BT device 104_2, and the packet segment PS4 of the BT packet PKT2 from the BT device 104_3, and obtains a single BT packet (i.e., BT packet PKT2) according to packet segments PS2-PS4 transmitted from different BT devices 104_1-104_3. In other words, the BT device 102 treats the packet segments PS2-PS4 as packet segments belonging to the same BT packet, and recovers the BT packet PKT2 by concatenating the packet segments PS2-PS4.

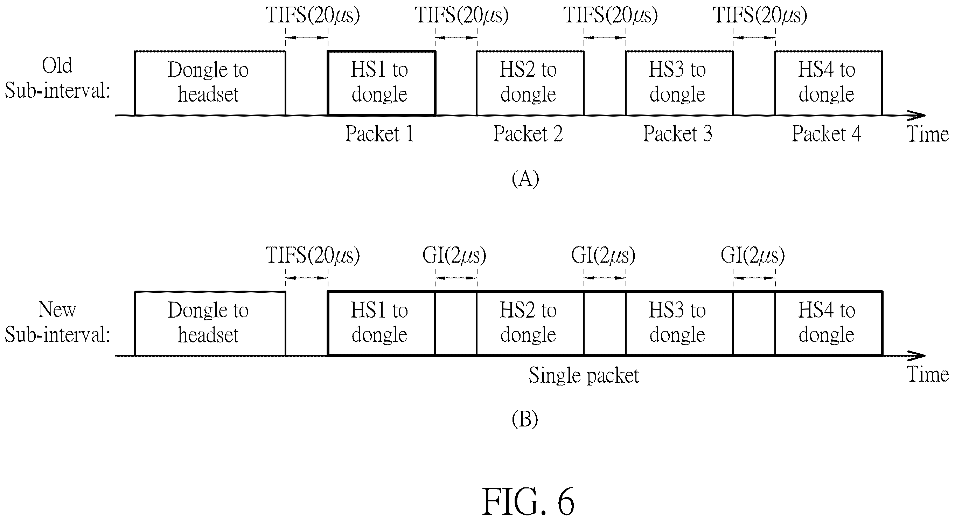

As shown in FIG. 3 to FIG. 5, transmission of a current packet segment (which carries PDU payload set by one BT device) and transmission of a next packet segment (which carries PDU payload set by another BT device) is spaced by a GI that is much shorter than a TIFS (which is a mandatory time delay that must occur between consecutive packets transmitted on the same channel). FIG. 6 is a diagram illustrating comparison between a sub-interval under a condition that the conventional HDT packet format is adopted and a sub-interval under a condition that the proposed multi-access packet format is adopted. Consider a case where one dongle device broadcasts downlink streaming data to four headsets HS1, HS2, HS3, HS4. When the conventional HDT packet format is adopted, four BT packets are transmitted from the headsets HS1, HS2, HS3, HS4, respectively. There is one TIFS between consecutive packets transmitted by two headsets, as illustrated in sub-diagram (A) of FIG. 6. When the proposed multi-access packet format is adopted, four packet segments of a single BT packet are transmitted from the headsets HS1, HS2, HS3, HS4, respectively. There is one GI (GI « TIFS) between consecutive packet segments transmitted by two headsets, as illustrated in sub-diagram (B) of FIG. 6. In this way, using the proposed multi-access packet format can shrink the sub-interval time, thereby addressing the transceiving time overhead issue and meeting requirements of a low-latency application (e.g., a gaming application).

In above embodiments, the proposed multi-access packet format may be used for BIS/CIS data transmission. However, this is for illustrative purposes only. In practice, any BT packet transmission using the proposed multi-access packet format falls within the scope of the present invention. For example, the proposed multi-access packet format may also be used for asynchronous connection-less (ACL) data transmission. In addition, lengths of the control header, the short training sequence, the long training sequence, the PDU header, and the PDU payload specified in the proposed multi-access packet format may be adjusted, depending upon actual application requirements. Furthermore, the bandwidth (BW) of the data part of the leading part and the BW of packet segments included in the following part may be adjusted, depending upon actual application requirements.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A Bluetooth, in the following also referred to as BT, communication system (100) comprising:
a first BT device (104_1), configured to generate and transmit a first packet segment; and
a second BT device (104_2), configured to generate and transmit a second packet segment;
wherein the first packet segment and the second packet segment belong to a single BT packet.

2. The BT communication system (100) of claim 1, wherein transmission of the first packet segment and transmission of the second packet segment is spaced by a guard interval, in the following also referred to as GI.

3. The BT communication system (100) of claim 1 or 2, wherein transmission of the first packet segment is followed by transmission of the second packet segment, and a control header is present in the first packet segment and absent in the second packet segment.

4. The BT communication system (100) of claim 3, further comprising:
a third BT device (102), configured to obtain the single BT packet from receiving a plurality of packet segments, wherein the plurality of packet segments comprise the first packet segment transmitted from the first BT device (104_1) and the second packet segment transmitted from the second BT device (104_2) .

5. The BT communication system (100) of claim 3 or 4, wherein the first BT device (104_1) is configured to transmit the first packet segment to the second BT device (104_2), and receive the second packet segment from the second BT device (104_2).

6. The BT communication system (100) of claim 1 or 2, wherein the single BT packet carries no control header.

7. The BT communication system (100) of claim 6, further comprising:
a third BT device (102), configured to obtain the single BT packet from receiving a plurality of packet segments, wherein the plurality of packet segments comprise the first packet segment transmitted from the first BT device (104_1) and the second packet segment transmitted from the second BT device (104_2).

8. A first Bluetooth, in the following also referred to as BT, device (102) comprising:
a wireless communication circuit (114), configured to receive a plurality of packet segments, wherein the plurality of packet segments comprise a first packet segment transmitted from a second BT device (104_1) and a second packet segment transmitted from a third BT device (104_2); and
a control circuit (112), configured to obtain a single BT packet according to the plurality of packet segments, wherein the plurality of packet segments belong to the single BT packet.

9. A first Bluetooth, in the following also referred to as BT, device comprising:
a control circuit, configured to generate a first packet segment; and
a wireless communication circuit, configured to transmit the first packet segment to a second BT device, and receive a second packet segment transmitted from the second BT device, wherein the first packet segment and the second packet segment belong to a single BT packet.

10. The first BT device (102) of claim 8 or 9, wherein transmission of the first packet segment and transmission of the second packet segment is spaced by a guard interval, in the following also referred to as GI.

11. The first BT device (102) of any one of claims 8 to 10, wherein transmission of the first packet segment is followed by transmission of the second packet segment, and a control header is present in the first packet segment and absent in the second packet segment.

12. The first BT device (102) of any one of claims 8 to 10, wherein the single BT packet carries no control header.

13. The BT communication system (100) of any one of claims 1 to 7, or the first BT device (102) of any one of claims 8 to 12, wherein the single BT packet is a Low Energy, in the following also referred to as LE, packet.

14. The BT communication system (100) of any one of claims 1 to 7 and 13, or the first BT device (102) of any one of claims 8 to 13, wherein the single BT packet is compliant with a Higher Data Throughput, in the following also referred to as HDT, packet format.
